# EUROPEAN PATENT SPECIFICATION

(11) **EP 2 313 694 B1**
(45) Date of publication and mention of the grant of the patent: **27.04.2016**
(21) Application number: 08874818.1
(22) Date of filing: 26.12.2008
(51) Int. Cl.: F24D 19/10, F24D 17/00, G05D 23/19

(54) **METHOD FOR CONTROLLING A HOT WATER TEMPERATURE IN USING LOW FLUX IN HOT WATER SUPPLY SYSTEM**
VERFAHREN ZUR STEUERUNG EINER WARMWASSERTEMPERATUR UNTER VERWENDUNG VON GERINGEM DURCHFLUSS IN EINEM WARMWASSERVERSORGUNGSSYSTEM
PROCÉDÉ POUR RÉGULER UNE TEMPÉRATURE D EAU CHAUDE EN UTILISANT UN FAIBLE DÉBIT DANS UN SYSTÈME D ALIMENTATION EN EAU CHAUDE

(30) Priority: 27.06.2008 KR 20080061423
(43) Date of publication of application: 27.04.2011
(73) Proprietor: Kyungdong One Corporation, Seoul 150-729 (KR)
(72) Inventor: KIM, Yong-Bum, Incheon 406-110 (KR); KIM, Si-Hwan, Incheon 405-771 (KR)
(74) Representative: Reuteler, Raymond Werner
(86) International application number: PCT/KR2008/007709
(87) International publication number: WO 2009/157630

(56) References cited:
- GB-A- 2 146 797
- JP-A- 6 109 263
- JP-A- 7 127 873
- JP-A- 2005 291 623
- US-A1- 2006 230 772

## Description

### Technical Field

The present invention relates to a method of controlling the temperature of hot water for using hot water at a low-flow rate in a hot water supply system that makes it possible to supply hot water at a user-desired temperature at a low-flow rate, even if hot water is used at a low-flow rate in the hot water supply system.

### Background Art

In general, hot water supply systems (hereafter, 'water heater') supply hot water to users while controlling the temperature of the hot water at a user-desired temperature, by igniting a heating device (hereafter, 'burner') after detecting flow and flow rate of inflow water and then transferring the heat of the burner to the water flowing into the water heater using a heat exchanger. However, when the amount of hot water used by a user is very small, such that it is difficult to detect flow and flow rate of water or when hot water is used at a low-flow rate such that it is difficult to ignite the burner even if the flow rate is detected, water heaters in the related art are constructed such that they cannot control the temperature of the hot water.

To be more detailed, common water heaters are configured to ignite a burner and control the temperature of hot water at user-desired temperature (hereafter, 'set-temperature') only when a user uses hot water of about 2 to 3 ℓ/min or more. According to this configuration, characteristics of a flow sensor, which detects the amount of hot water used, is designed to correspond to a region that users frequently use, such that the accuracy of the flow sensor deteriorates when the flow rate is very small, 2 to 3 ℓ/min or less. Further, even if the temperature is controlled by the minimum heating power of the burner according to the capacity of the water heater, hot water at higher temperature than the set-temperature may be supplied, when the temperature of inflow water is slightly high and the amount of water used is very small.

Therefore, manufacturers of water heaters have set minimum flow rate for controlling the temperature of hot water. For example, the amount of hot water used by a user is checked by a flow sensor, in which the heating power of a burner is controlled by operating the water heater, when the amount is 2.5 ℓ/min or more. This level is commonly called 'operation flow rate' and is supposed to be specified for each product. That is, water heaters do not operate, when the amount of water used is smaller than operational flow rate. Therefore, for example, when a user uses hot water at a flow rate below 2.5 ℓ/min, a water heater does not operate and cannot control the temperature of the hot water.

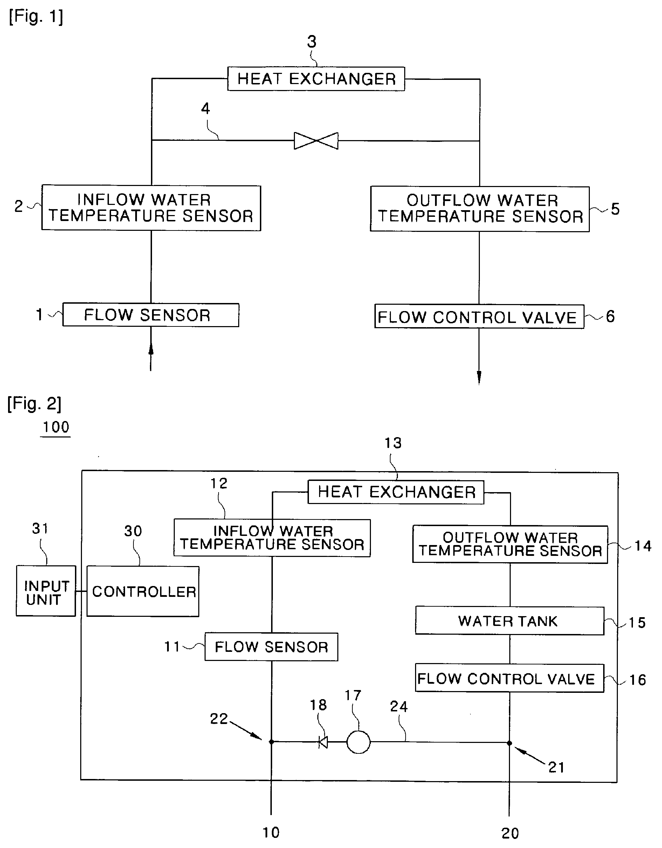

In a water heater in the related art shown in Fig. 1, as water flows inside through an inlet 1 of the water heater, a flow sensor 2 detects the flow rate used and an inflow water temperature sensor 3 measures the temperature of the inflow water. A burner is ignited to supply hot water at set-temperature by comparing the measured temperature with the set-temperature and the temperature of the hot water is controlled by transferring the heating power of the burner to a heat exchanger 4.

Although the operation flow rates of water heaters are different for each manufacturer of water heaters, they are about 2 to 3 ℓ/min.

The document GB 2 146 797 discloses a hot water heating system which is designed to meet variable peaks in hot water demand. The system comprises a hot water sensor, a heater and a water flow sensor arranged on the cold water inlet of the heating system. A processor and control assembly are configured to receive input from the water flow sensor and to detect a hot water consumption flow from the system. When the processor and control assembly detects a consumption flow, the system immediately activates the heating of new cold water within a water storage tank.

Generally, GB 2 146 797 discloses a method of controlling temperature of hot water for using hot water at a low flow rate of less than 3 liters/min operation flow rate in a hot water supply system, which includes a heating device adapted to produce heat by combustion, a flow sensor that measures the flow rate of water flowing into the hot water supply system, a heat exchanger that transfers heat of the heating device to the water that has flowed inside, a water tank that temporarily stores the water in the hot water supply system, a temperature sensor that is disposed at a predetermined position in a pipe line through which the water flows, a controller that has an input unit to allow a user to input desired conditions and a pump that is disposed in a pipe line connecting a first diverging point formed at a pipe line for an outlet and a second diverging point formed at a pipe line for an inlet, an internal circulation flow path connecting the first diverging point, the second diverging point and the heat exchanger being formed. The method comprises measuring the flow rate of water flowing into the hot water supply system, using the flow sensor and measuring the temperature of the water circulating, using the temperature sensor.

### Disclosure of Invention

### Technical Problem

As described above, when smaller amount of water than the operation flow rate is used, the value measured by the flow sensor 2 is smaller than the operation flow rate and the burner is not ignited.

The flow rate used by users taking a shower is different, depending on the user's habit, but they commonly usewater at flow rate of about 8 to 10 ℓ/min when using one hot water valve. When the water pressure at the inlet is low or the amount water used is very small, such as when a user is shaving, the flow rate used is smaller than the operation flow rate, such that the water heater does not operate and hot water is not supplied.

### Technical Solution

Designed in consideration of the above problems, an object of the present invention is to provide a method of controlling the temperature of hot water for using hot water at a low-flow rate, which makes it possible to control the temperature of hot water by operating the water heater, even if the water pressure at an inlet of the water heater is low or a user uses water at flow rate smaller than common operation flow rate of the water heater.

### Advantageous Effects

According to the present invention, since the controller circulates the water in the water heater through the internal circulation path, using the pump, by activating the preheating circulation mode, when flow rate below the operation flow rate of the water heater is detected, it is possible to control the temperature of the hot water even if the water pressure is low at the inlet or a user uses hot water at a lowflow rate less than the operation flow rate of common water heater.

### Brief Description of Drawings

FIG. 1 is a view illustrating the configuration of a water heater in the related art;
FIG. 2 is a view illustrating the configuration of a water heater according to a first embodiment of the present invention;
FIG. 3 is a view illustrating the configuration of a water heater according to a second embodiment of the present invention;
FIG. 4 is a view illustrating the flow path of water in preheating, in the water heater according to the first embodiment of the present invention;
FIG. 5 is a view illustrating the flow path of water while hot water is used, in the water heater according to the first embodiment of the present invention; and
FIG. 6 is a flowchart illustrating a method of controlling the temperature of hot water while hot water is used at a low-flow rate in a water heater of the present invention.

### Best Mode for Carrying out the Invention

A method of controlling temperature of hot water for using hot water at a low-flow rate according to the present invention, in a hot water supply system which includes: a flow sensor that measures the flow rate of water flowing into the hot water supply system; a heat exchanger that transfers heat of a heating device to the water that has flowed inside; a water tank that temporarily stores the water in the hot water supply system; a temperature sensor that is disposed at a predetermined position in a pipe line through which the water flows; a controller that has an input unit to allow a user to input desired conditions; and a pump that is disposed in a pipe line connecting a first diverging point formed at a pipe line for an outlet and a second diverging point formed at a pipe line for an inlet, includes: measuring the flow rate of water flowing into the hot water supply system, using the flow sensor; preheating-circulating water in the hot water supply system through an internal circulation path connecting the first diverging point, the second diverging point, and the heat exchanger, using the pump, after the controller stops the combustion of the heating device when the measured flow rate is an operation flow rate of the water supply system or less; measuring the temperature of the water circulating, using the temperature sensor; and setting the predetermined temperature above user set-temperature as preheating circulation-off temperature and predetermined temperature below the set temperature as preheating circulation-on temperature, and then starting the operation of the heating device when the temperature measured by the temperature sensor is preheating circulation-on temperature or less and stopping the operation of the heating device when the measured temperature is the preheating circulation off temperature or more, using the controller.

Further the method is characterized by further including: determining whether the user has selected a low-flow rate mode through the input unit, using the controller; and determining new preheating circulation-on temperature between the user set-temperature and the preheating circulation-on temperature and new preheating circulation-off temperature between the user set-temperature and the preheating circulation-off temperature, and then starting operation of the heating device when the temperature measured by the temperature sensor is the newly determined preheating circulation-on temperature or less, and stopping the operation of the heating device when the measured temperature is the newly determined preheating circulation-off temperature or more, when the user has selected the low-flow rate mode, using the controller.

Further, the method is characterized by further including: stopping the operation of the pump after a predetermined time has passed, when the temperature measured by the temperature sensor is the preheating circulation-off temperature or more; and restarting operation of the pump after stopping the operation of the pump, when the temperature measured by the temperature sensor is the preheating circulation-on temperature or less.

Further, the method is characterized by further including: stopping the operation of the pump after a predetermined time has passed, when the temperature measured by the temperature sensor is the newly determined preheating circulation-off temperature or more; and restarting operation of the pump after stopping the operation of the pump, when the temperature measured by the temperature sensor is the newly determined preheating circulation-on temperature or less.

Further, the method is characterized by further including: determining whether the user has selected the preheating circulation-on temperature and the preheating circulation-off temperature while selecting the low-flow rate mode through the input unit, using the controller; and controlling operation of the heating device according to the preheating circulation-on temperature and the preheating circulation-off temperature selected by the user, when the user has selected the preheating circulation-on temperature and the preheating circulation-off temperature, using the controller.

Further, the method is characterized by further including: determining whether the user has selected the time for the preheating circulation for one day through the input unit and inputting the time into the input unit, using the controller; and performing the preheating circulation for the time selected by the user, when the user has inputted the time for the preheating circulation, using the controller.

### Mode for the Invention

The configuration and operation of preferred embodiments of the present invention are described hereafter in detail with reference to the accompanying drawings. Giving reference numerals to components in the drawings herein, it is noted that the same components are designated by substantially the same reference numerals, even though they are shown in different drawings.

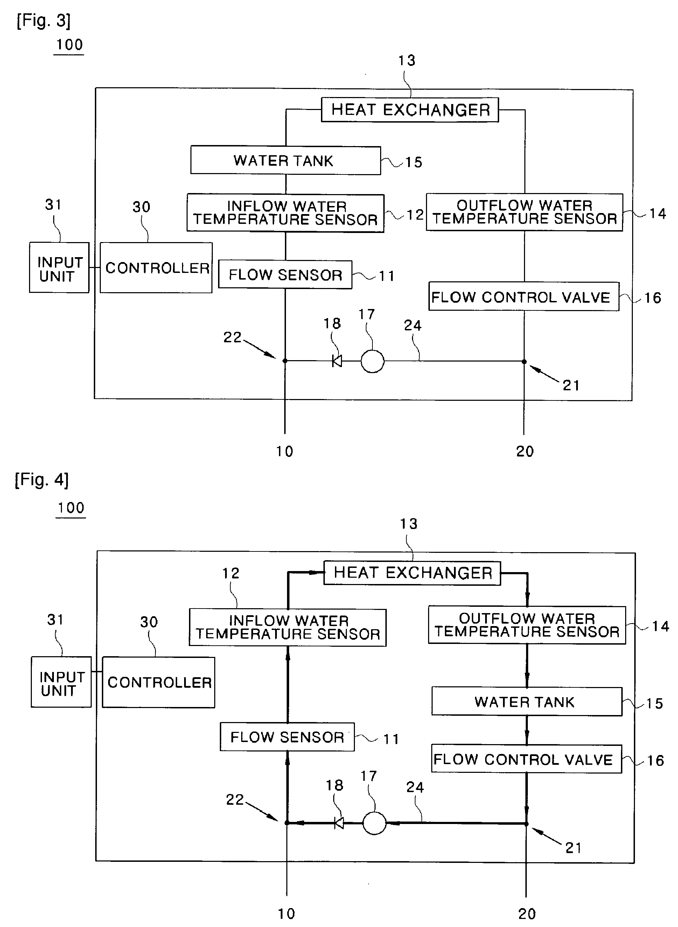

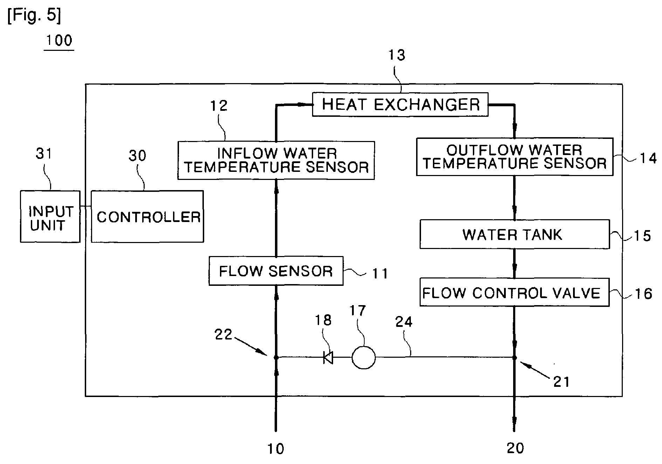

FIG. 2 is a view illustrating the configuration of a water heater according to a first embodiment of the present invention, FIG. 3 is a view illustrating the configuration of a water heater according to a second embodiment of the present invention, FIG. 4 is a view illustrating the flow path of water in preheating, in the water heater according to the first embodiment of the present invention, and FIG. 5 is a view illustrating the flow path of water while hot water is used, in the water heater according to the first embodiment of the present invention.

As shown in FIG. 2, a water heater 100 according to an embodiment of the present invention includes a flow sensor 11 that measures the flow rate of inflow water, an inflow water temperature sensor 12 that measures the temperature of the water that has flowed inside through the inlet 10, a heat exchanger 13 that transfers heat of a burner to the water, which has flowed inside, to send the inflow water at a set-temperature, an outflow water temperature sensor 14 that measures the temperature of water that has passed through the heat exchanger, a water tank 15 that stores the water that has passed through the heat exchanger 13, a flow control valve 16 that adjusts the flow rate of hot water, a pump 17 that is disposed in a pipe line 24 connecting a first diverging point 21 formed at a pipe line for an outlet 20 with a second diverging point 22 formed at a pipe line for the inlet 10, a check valve 18 that prevents backflow, and a controller 30 that has an input unit 31 to input user-desired conditions.

In general, when a user uses hot water, the controller 30 determines the amount of hot water used, using the flow sensor 11 and measures the temperature, using the inflow water temperature sensor 12. Thereafter, the heating power of the burner, which allows the water that has flowed inside on the basis of the present amount of hot water used to reach the set-temperature, is calculated by comparing the measured temperature of the water with the set-temperature, and the temperature of the hot water is correspondingly controlled. The temperature of the water that has passed through the heat exchanger 13 is measured by the outflow water temperature sensor 14, and when there is a difference between the measured temperature of the outflow water and the set-temperature, the temperature of the hot water is controlled by adjusting the heating power of the burner. The hot water that has passed through the heat exchanger 13 is stored in the water tank 15 and then supplied to the user through the outlet 20.

Although the water tank 15 is disposed at the rear end of the heat exchanger 13 in the water heater according to the above embodiment of the present invention, the water tank may be disposed at the front end of the heat exchanger 13, as in the second embodiment shown in FIG. 3.

The larger the capacity of the water tank 15, the more profitable it is to cope with the increase/decrease in the amount of hot water used by a user; however, as the capacity of the water tank 15 increases, the entire volume increases, such that there is a limit to increase the capacity of the water tank. In general, the capacity of water tanks is 2 to 3 ℓ.

When the user stops using hot water or uses hot water at a very low-flow rate, such that the flow rate detected by the flow sensor 11 is, for example, smaller than 2.5 ℓ/ min, it is determined that the users has stopped using hot water and thus the combustion of the burner is stopped. In this operation, the outlet 20 is closed and a preheating circulation mode, which circulates hot water along an internal circulation path connecting the first diverging point 21, the second diverging point 22, and the heat exchanger 13, which is indicated by a bold line in FIG. 4, by pressure of the pump 17, is activated.

In the preheating circulation mode, the controller 30 detects the temperature of the water circulating, through the outflow water temperature sensor 14, starts combustion when the temperature is 5°C lower than hot water preheating temperature set by the user (hereafter, referred to as hot water preheat-on temperature), and stops the combustion when the temperature detected by the outflow water temperature sensor 14 is 5°C higher than the hot water preheating temperature (hereafter, referred to as hot water preheat-off temperature), thereafter, operates the pump 17 for a predetermined time (e.g., 10 seconds) and stops it.

It depends on the design to set starting combustion of the burner when how much the temperature at the outflow water temperature sensor 14 is lower than the set-temperature and stopping the combustion when how much the temperature is higher, that is, to set the hot water preheat-on temperature and the hot water preheat-off temperature.

Since hot water close to the set-temperature always circulates in the water heater by the above method, for example, even if the water pressure at the inlet is low or the user uses hot water at a very low-flow rate, below the operation flow rate of the water heater, such as when shaving, hot water at the user-desired temperature can always be supplied. Further, it is possible to quickly supply hot water corresponding to the set-temperature, even if the user thereafter restarts using hot water. Further, since the hot water is always circulated by the preheating circulation mode, it is possible to achieve additional effect that prevents pipe lines of the water heater from freezing and bursting due to decrease in the temperature of the outside air during winter.

The user can desirably set the time for the preheating circulation by operating the input unit 31. For example, the user can set the time such that preheating circulation always continues for 24 hours. On the other hand, the user can set the time such that preheating circulation is made, for example, from 6 am to 12 pm, except for sleeping hours.

If a user frequently uses hot water at a low-flow rate, depending on the conditions of using hot water or the user's habits, it is possible to control the hot water preheat-on temperature and the hot water preheat-off temperature, for example, within ±2°C from the set-temperature, by setting 'low-flow rate mode' through the input unit 31 connected with the controller 31.

In other words, as the user sets the 'low-flow rate mode' through the input unit 31, the pump 17 of the water heater 100 circulates the water inside the water heater, the burner starts combustion to increase the temperature of the water in the water heater, when the temperature at the outflow water temperature sensor 14 is 2°C lower than the set-temperature, and stops the combustion when the temperature measured by the outflow water temperature sensor 14 is 2°C higher than the set-temperature, and thereafter, the pump 17 operates for a predetermined time and then stops. Thereafter, when the temperature at the outlet gradually drops and becomes 2°C lower than the set-temperature by continuously using hot water at a low-flow rate, the burner restarts combustion and the temperature at the outlet is made to be maintained at ±2°C from the set-temperature by operating the pump. In this operation, the user can set the hot water preheat-on temperature and the hot water preheat-off temperature, simultaneously with setting the low-flow rate mode, through the input unit 31. Accordingly, it is possible to supply hot water even though a user uses hot water at a low-flow rate.

When the user uses hot water again, as indicated by a bold line in FIG. 5, the water that has flowed in side through the inlet 10 is heated through the heat exchanger 13 and then discharged out of the outlet 20 through the water tank 15 and supplied to the user.

As the user opens a valve disposed at the outlet 20 to use hot water, water that has reached the first diverging point 21 is completely discharged through the outlet 20 by pressure difference and internal circulation, as shown in FIG. 4, is not longer performed. The flow sensor 11 is disposed in the pipe line connecting the inlet 10 with the heat exchanger 13, such that when water flowing over the operation flow rate of the water heater is detected, a detected signal is transmitted to the controller 30 and the controller 30 operates the burner to control the temperature in the heat exchanger 13.

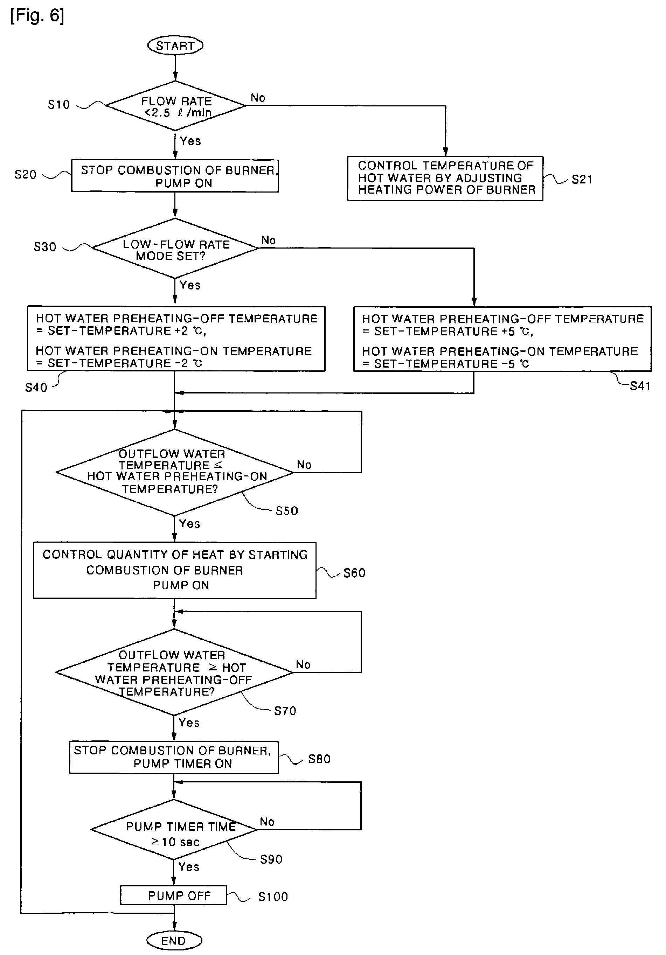

FIG. 6 is a flowchart illustrating a method of controlling the temperature of hot water while hot water is used at a low-flow rate in a water heater of the present invention.

First, the controller 30 determines whether the amount of hot water used by a user, which is detected by the flow sensor 11, is below the operation flow rate of the water heater, for example, below 2.5 ℓ/min (S10).

The burner stops combustion and the pump 17 starts to operate, when the amount of hot water used is blow 2.5 ℓ/min (S20). When the amount of hot water used is above 2.5 ℓ/min, the temperature of the hot water is controlled by adjusting the heating power of the burner according to common methods (S21).

Subsequently, it is determined whether the user has set a 'low-flow rate mode' (S30).

When the user has set the 'low-flow rate mode', the controller sets the hot water preheat-off temperature to +2°C of the set-temperature and the hot water preheat-on temperature to -2°C of the set-temperature (S40).

When the user has not set the 'low-flow rate mode', the controller, for example, sets the hot water preheat-off temperature to +5°C of the set-temperature and the hot water preheat-on temperature to -5°C of the set-temperature (S41).

Next, it is determined that the temperature of hot water measured by the outflow water temperature sensor 14 is the hot water preheat-on temperature or less (S50). When the temperature is the hot water preheat-on temperature or less, the burner starts combustion to control the quantity of heat and the pump starts to operate (S60). On the other hand, when the measured temperature is above the hot water preheat-on temperature, this process returns to the step S50 and measures the temperature of the outflow water again.

Next, it is determined that the temperature of hot water measured by the outflow water temperature sensor 14 is the hot water preheat-off temperature or more (S70). When the measured temperature of the hot water is the hot water preheat-off temperature or more, the burner stops the combustion and a pump timer is turned on (S80). When the measured temperature of the hot water is below the hot water preheat-off temperature, this process returns to step S70.

Next, it is determined whether the time of the pump timer has passed 10 seconds (S90). When the time of the pump timer has passed 10 seconds, the pump is turned off (S100). Thereafter, the process returns to the step S50.

When a user desires to use hot water at a low-flow rate using this method, it is possible to remove inconvenience of water heaters in the related art that cannot provide hot water due to non-operation of the water heaters. As a water heater according to an embodiment of the present invention can provide hot water corresponding to set-temperature when supplying hot water at a very low-flow rate, it is possible to control the temperature of hot water in the water heater at the user's set-temperature, regardless of installation conditions of the water heater or the user's habits.

### Industrial Applicability

It is apparent to those skilled in the art that the present invention is not limited to the above embodiments and can be modified and changed in various ways, without departing from the scope of the present invention.

## Claims

1. A method of controlling temperature of hot water for using hot water at a low- flow rate of less than 3 liters/min operation flow rate in a hot water supply system, which includes: a heating device adapted to produce heat by combustion, a flow sensor (11) that measures the flow rate of water flowing into the hot water supply system; a heat exchanger (13) that transfers heat of the heating device to the water that has flowed inside; a water tank (15) that temporarily stores the water in the hot water supply system; a temperature sensor (14) that is disposed at a predetermined position in a pipe line (24) through which the water flows; a controller (30) that has an input unit (31) to allow a user to input desired conditions; and a pump (17) that is disposed in a pipe line (24) connecting a first diverging point (21) formed at a pipe line for an outlet (20) and a second diverging point (22) formed at a pipe line for an inlet (10), the method comprising measuring the flow rate of water flowing into the hot water supply system, using the flow sensor and **characterized by**
preheating and circulating water in the hot water supply system through an internal circulation path connecting the first diverging point, the second diverging point, and the heat exchanger, using the pump, after the controller stops the combustion of the heating device when the measured flow rate is an operation flow rate of the water supply system or less; measuring the temperature of the water circulating, using the temperature sensor;
and
setting predetermined temperature above user set-temperature as preheating circulation-off temperature and predetermined temperature below the set temperature as preheating circulation-on temperature, and then starting operation of the heating device when the temperature measured by the temperature sensor is preheating circulation-on temperature or less and stopping the operation of the heating device when the measured temperature is the preheating circulation-off temperature or more, using the controller.

2. The method of controlling temperature of hot water for using hot water at a low- flow rate in a hot water supply system according to claim 1, further comprising: determining whether the user has selected a low-flow rate mode through the input unit, using the controller; and determining new preheating circulation-on temperature between the user set- temperature and the preheating circulation-on temperature and new preheating circulation-off temperature between the user set-temperature and the preheating circulation-off temperature, and then starting operation of the heating device when the temperature measured by the temperature sensor is the newly determined preheating circulation-on temperature or less, and stopping the operation of the heating device when the measured temperature is the newly determined preheating circulation-off temperature or more, when the user has selected the low-flow rate mode, using the controller.

3. The method of controlling temperature of hot water for using hot water at a low- flow rate in a hot water supply system according to claim 1, further comprising: stopping the operation of the pump after a predetermined time has passed, when the temperature measured by the temperature sensor is the preheating circulation- off temperature or more; and restarting operation of the pump after stopping the operation of the pump, when the temperature measured by the temperature sensor is the preheating circulation- on temperature or less.

4. The method of controlling temperature of hot water for using hot water at a low--flow rate in a hot water supply system according to claim 2, further comprising: stopping the operation of the pump after a predetermined time has passed, when the temperature measured by the temperature sensor is the newly determined preheating circulation-off temperature or more; and restarting operation of the pump after stopping the operation of the pump, when the temperature measured by the temperature sensor is the newly determined preheating circulation-on temperature or less.

5. The method of controlling temperature of hot water for using hot water at a low- flow rate in a hot water supply system according to claim 4, further comprising: determining whether the user has selected the preheating circulation-on temperature and the preheating circulation-off temperature while selecting the low-flow rate mode through the input unit, using the controller; and controlling operation of the heating device according to the preheating circulation-on temperature and the preheating circulation-off temperature selected by the user, when the user has selected the preheating circulation-on temperature and the preheating circulation-off temperature, using the controller.

6. The method of controlling temperature of hot water for using hot water at a low- flow rate in a hot water supply system according to any one of claims 1 to 5, further comprising: determining whether the user has selected the time for the preheating circulation for one day through the input unit and inputting the time into the input unit, using the controller; and performing the preheating circulation for the time selected by the user, when the user has inputted the time for the preheating circulation, using the controller.

## Patentansprüche

1. Verfahren zur Steuerung einer Temperatur von Warmwasser für Verwendung von Warmwasser bei einem geringen Betriebs-Durchfluss von weniger als 3 l/min Durchfluss in einem Warmwasserversorgungssystem, das Folgendes aufweist: eine Heizvorrichtung, die angepasst ist für eine Wärmeerzeugung durch Verbrennung, einen Strömungssensor (11), der den Volumenstrom des in das Warmwasserversorgungssystem fließenden Wassers misst; einen Wärmetauscher (13), der Wärme von der Heizvorrichtung auf das Wasser, das innenseitig geströmt ist, überträgt; einen Wassertank (15), der vorübergehend das Wasser im Warmwasserversorgungssystem speichert; ein Temperatursensor (14), der in einer im Voraus bestimmten Position in einer Rohrleitung (24), durch die das Wasser strömt, angeordnet ist; der Steuerung (30), die mit einer Eingabeeinheit (31) versehen ist, um einem Anwender die Eingabe gewünschter Bedingungen zu gestatten; und eine Pumpe (17), die in einer Rohrleitung (24) angeordnet ist und einen ersten Verzweigungspunkt (21), der an einer Rohrleitung für einen Auslass (20) gebildet ist, mit einem zweiten Verzweigungspunkt (22), der an einer Rohrleitung für einen Einlass (10) gebildet ist, verbindet, wobei das Verfahren Messen, unter Verwendung des Strömungssensors, des Durchflusses von Wasser, das in das Warmwasserversorgungssystem strömt, umfasst und **gekennzeichnet ist durch**
Vorerhitzen und Umwälzen von Wasser im Warmwasserversorgungssystem **durch** einen internen Umwälzpfad, der den ersten Verzweigungspunkt, den zweiten Verzweigungspunkt und den Wärmetauscher unter Verwendung der Pumpe miteinander verbindet, wonach die Steuerung die Verbrennung der Heizvorrichtung unterbricht, wenn der gemessene Volumenstrom ein Betriebs-Durchfluss des Warmwasserversorgungssystems oder geringer ist; Messen der Temperatur des umlaufenden Wassers unter Verwendung des Temperatursensors;
und
Festlegen einer im Voraus bestimmten Temperatur oberhalb einer Anwender-Soll-Temperatur als Vorerhitzungs-Umwälzungs-Abschalttemperatur und einer im Voraus bestimmten Temperatur unterhalb der Soll-Temperatur als Vorerhitzungs-Umwälzungs-Einschalttemperatur, und danach Starten des Betriebs der Heizvorrichtung, wenn die vom Temperatursensor gemessene Temperatur die Vorerhitzungs-Umwälzungs-Einschalttemperatur oder niedriger ist, und Anhalten des Betriebs der Heizvorrichtung, wenn die vom Temperatursensor unter Verwenden der Steuerung gemessene Temperatur die Vorerhitzungs-Umwälzungs-Abschalttemperatur oder höher ist.

2. Verfahren zur Steuerung einer Temperatur von Warmwasser für Verwendung von Warmwasser bei einem geringen Durchfluss in einem Warmwasserversorgungssystem nach Anspruch 1, ferner aufweisend: Bestimmen, ob der Anwender durch die Eingabeeinheit, unter Verwendung der Steuerung, einen Modus mit geringem Durchfluss gewählt hat; und Bestimmen einer neuen Vorerhitzungs-Umwälzungs-Einschalttemperatur zwischen der Anwender-Soll-Temperatur und der Vorerhitzungs-Umwälzungs-Einschalttemperatur und der neuen Vorerhitzungs-Umwälzungs-Abschalttemperatur zwischen der Anwender-Soll-Temperatur und der Vorerhitzungs-Umwälzungs-Abschalttemperatur, und danach Starten des Betriebs der Heizvorrichtung, wenn die vom Temperatursensor gemessene Temperatur die neu bestimmte Vorerhitzungs-Umwälzungs-Einschalttemperatur oder niedriger ist, und Anhalten des Betriebs der Heizvorrichtung, wenn die vom Temperatursensor gemessene Temperatur die neu bestimmte Vorerhitzungs-Umwälzungs-Abschalttemperatur oder höher ist, wenn der Anwender unter Verwendung der Steuerung, einen Modus mit geringem Durchfluss gewählt hat.

3. Verfahren zur Steuerung einer Temperatur von Warmwasser für Verwendung von Warmwasser bei einem geringen Durchfluss in einem Warmwasserversorgungssystem nach Anspruch 1, ferner aufweisend: Anhalten des Betriebs der Pumpe nach Ablauf einer im Voraus bestimmten Zeit, wenn die vom Temperatursensor gemessene Temperatur die Vorerhitzungs-Umwälzungs-Abschalttemperatur oder höher ist; und Neustarten des Betriebs der Pumpe nach dem Anhalten des Betriebs der Pumpe, wenn die vom Temperatursensor gemessene Temperatur die Vorerhitzungs-Umwälzungs-Einschalttemperatur oder weniger ist.

4. Verfahren zur Steuerung einer Temperatur von Warmwasser für Verwendung von Warmwasser bei einem geringen Durchfluss in einem Warmwasserversorgungssystem nach Anspruch 2, ferner aufweisend: Anhalten des Betriebs der Pumpe nach Ablauf einer im Voraus bestimmten Zeit, wenn die vom Temperatursensor gemessene Temperatur die neu bestimmte Vorerhitzungs-Umwälzungs-Abschalttemperatur oder höher ist; und Neustarten des Betriebs der Pumpe nach dem Anhalten des Betriebs der Pumpe, wenn die vom Temperatursensor gemessene Temperatur die neu bestimmte Vorerhitzungs-Umwälzungs-Einschalttemperatur oder weniger ist.

5. Verfahren zur Steuerung einer Temperatur von Warmwasser für Verwendung von Warmwasser bei einem geringen Durchfluss in einem Warmwasserversorgungssystem nach Anspruch 4, ferner aufweisend: Bestimmen, ob der Anwender während der Wahl des Modus mit geringem Durchfluss durch die Eingabeeinheit, unter Verwendung der Steuerung, die Vorerhitzungs-Umwälzungs-Einschalttemperatur und die Vorerhitzungs-Umwälzungs-Abschalttemperatur gewählt hat; und Steuerung des Betriebs der Heizvorrichtung entsprechend der vom Anwender gewählten Vorerhitzungs-Umwälzungs-Einschalttemperatur und Vorerhitzungs-Umwälzungs-Abschalttemperatur, wenn der Anwender die Vorerhitzungs-Umwälzungs-Einschalttemperatur und die Vorerhitzungs-Umwälzungs-Abschalttemperatur unter Verwendung der Steuerung gewählt hat.

6. Verfahren zur Steuerung einer Temperatur von Warmwasser für Verwendung von Warmwasser bei einem geringen Durchfluss in einem Warmwasserversorgungssystem nach einem der Ansprüche 1 bis 5, ferner aufweisend: Bestimmen, ob der Anwender die Zeit für die Vorerhitzungs-Umwälzung für einen Tag durch die Eingabeeinheit und Eingeben der Zeit in die Eingabeeinheit unter Verwendung der Steuerung gewählt hat; und Ausführen der Vorerhitzungs-Umwälzung während der vom Anwender gewählten Zeit, wenn der Anwender die Zeit für die Vorerhitzungs-Umwälzung unter Verwendung der Steuerung eingegeben hat.

## Revendications

1. Procédé de régulation de la température d'eau chaude afin d'utiliser de l'eau chaude à un débit réduit inférieur à 3 litres/minute dans un système d'alimentation en eau chaude, qui comprend : un dispositif de chauffage adapté pour produire de la chaleur par combustion, un capteur de débit (11) qui mesure le débit de l'eau qui circule dans le système d'alimentation en eau chaude ; un échangeur thermique (13) qui transfère la chaleur du dispositif de chauffage vers l'eau qui s'est écoulée à l'intérieur ; un réservoir d'eau (15) qui stocke temporairement l'eau dans le système d'alimentation en eau chaude ; un capteur de température (14) qui est disposé à un emplacement prédéterminé dans une conduite (24) dans laquelle circule l'eau ; un contrôleur (30) qui possède une unité de saisie (31) destinée à permettre à un utilisateur de saisir des conditions souhaitées ; et une pompe (17) qui est disposée dans une conduite (24) qui relie un premier point de déviation (21) formé au niveau d'une conduite destinée à une sortie (20) et un second point de déviation (22) formé au niveau d'une conduite destinée à une admission (10), le procédé comprenant la mesure du débit de l'eau qui circule dans le système d'alimentation en eau chaude, à l'aide du capteur de débit, et **caractérisé par**
le préchauffage et la circulation de l'eau qui se trouve dans le système d'alimentation en eau chaude par le biais d'un trajet de circulation interne qui relie le premier point de déviation, le second point de déviation, et l'échangeur thermique, à l'aide de la pompe, après que le contrôleur ait arrêté la combustion du dispositif de chauffage dès que le débit mesuré est devenu égal ou inférieur au débit de fonctionnement du système d'alimentation en eau ; la mesure de la température de l'eau qui circule, à l'aide du capteur de température ;
et
la définition d'une température prédéterminée au-dessus de la température définie par l'utilisateur en tant que température de préchauffage hors circulation, et d'une température prédéterminée au-dessous de la température définie comme température de préchauffage pendant la circulation, puis le déclenchement du dispositif de chauffage dès que la température mesurée par le capteur de température est égale ou inférieure à la température de préchauffage pendant la circulation, et l'arrêt du dispositif de chauffage dès que la température mesurée devient égale ou supérieure à la température de préchauffage hors circulation, à l'aide du contrôleur.

2. Procédé de régulation de la température d'eau chaude afin d'utiliser de l'eau chaude à un débit réduit dans un système d'alimentation en eau chaude selon la revendication 1, qui comprend en outre : la détermination du fait que l'utilisateur ait sélectionné ou non un mode de débit réduit par le biais de l'unité de saisie, à l'aide du contrôleur ; et la détermination d'une nouvelle température de préchauffage pendant la circulation comprise entre la température définie par l'utilisateur et la température de préchauffage pendant la circulation, et d'une nouvelle température de préchauffage hors circulation comprise entre la température définie par l'utilisateur et la température de préchauffage hors circulation, puis le déclenchement du dispositif de chauffage dès que la température mesurée par le capteur de température est égale ou inférieure à la nouvelle température de préchauffage pendant la circulation, et l'arrêt du dispositif de chauffage dès que la température mesurée est égale ou supérieure à la nouvelle température de préchauffage hors circulation, lorsque l'utilisateur a sélectionné le mode à faible débit, à l'aide du contrôleur.

3. Procédé de régulation de la température d'eau chaude afin d'utiliser de l'eau chaude à un débit réduit dans un système d'alimentation en eau chaude selon la revendication 1, qui comprend en outre : l'arrêt de la pompe après qu'une durée prédéterminée se soit écoulée, lorsque la température mesurée par le capteur de température est égale ou supérieure à la température de préchauffage hors circulation ; et le redémarrage de la pompe après l'arrêt de la pompe, dès que la température mesurée par le capteur de température est égale ou inférieure à la température de préchauffage pendant la circulation.

4. Procédé de régulation de la température d'eau chaude afin d'utiliser de l'eau chaude à un débit réduit dans un système d'alimentation en eau chaude selon la revendication 2, qui comprend en outre : l'arrêt de la pompe après qu'une durée prédéterminée se soit écoulée, dès que la température mesurée par le capteur de température est égale ou supérieure à la nouvelle température de préchauffage hors circulation ; et le redémarrage de la pompe après l'arrêt de la pompe dès que la température mesurée par le capteur de température est égale ou inférieure à la nouvelle température de préchauffage pendant la circulation.

5. Procédé de régulation de la température d'eau chaude afin d'utiliser de l'eau chaude à un débit réduit dans un système d'alimentation en eau chaude selon la revendication 4, qui comprend en outre : la détermination du fait que l'utilisateur ait sélectionné ou non la température de préchauffage pendant la circulation et la température de préchauffage hors circulation tout en sélectionnant le mode à faible débit par le biais de l'unité de saisie, à l'aide du contrôleur ; et le contrôle du dispositif de chauffage selon la température de préchauffage pendant la circulation et la température de préchauffage hors circulation sélectionnée par l'utilisateur, lorsque l'utilisateur a sélectionné la température de préchauffage pendant la circulation et la température de préchauffage hors circulation, à l'aide du contrôleur.

6. Procédé de régulation de la température d'eau chaude afin d'utiliser de l'eau chaude à un débit réduit dans un système d'alimentation en eau chaude selon l'une quelconque des revendications 1 à 5, qui comprend en outre : la détermination du fait que l'utilisateur ait sélectionné la durée de la circulation avec préchauffage pendant un jour par le biais de l'unité de saisie, et ait saisi la durée sur l'unité de saisie, à l'aide du contrôleur ; et l'exécution de la circulation avec préchauffage pendant la durée sélectionnée par l'utilisateur, lorsque l'utilisateur a saisi la durée de la circulation avec préchauffage, à l'aide du contrôleur.
